# EUROPÄISCHE PATENTSCHRIFT

(11) **EP 0 731 002 B1**
(45) Veröffentlichungstag und Bekanntmachung des Hinweises auf die Patenterteilung: **16.05.2001**
(21) Anmeldenummer: 96103146.5
(22) Anmeldetag: 01.03.1996
(51) Int. Cl.: B60R 21/00

(54) **Anordnung zur Verhinderung von Fehlauslösungen bei Insassen-Schutzsystemen**
Arrangement for preventing false activtion of vehicle occupant protection systems
Dispositif pour empêcher le déclenchement erroné des systèmes de protection des occupants d'un véhicule

(30) Priorität: 04.03.1995 DE 19507620
(43) Veröffentlichungstag der Anmeldung: 11.09.1996
(73) Patentinhaber: TEMIC TELEFUNKEN microelectronic GmbH, 90411 Nürnberg (DE)
(72) Erfinder: Fendt, Günter, D-86529 Schrobenhausen (DE); Hora, Peter, D-86529 Schrobenhausen (DE)
(74) Vertreter: Maute, Hans-Jürgen, Dipl.-Ing.

(56) Entgegenhaltungen:
- WO-A-90/02440
- WO-A-91/00636
- WO-A-91/05680
- WO-A-93/17893
- DE-A- 4 432 444
- US-A- 5 046 149

## Beschreibung

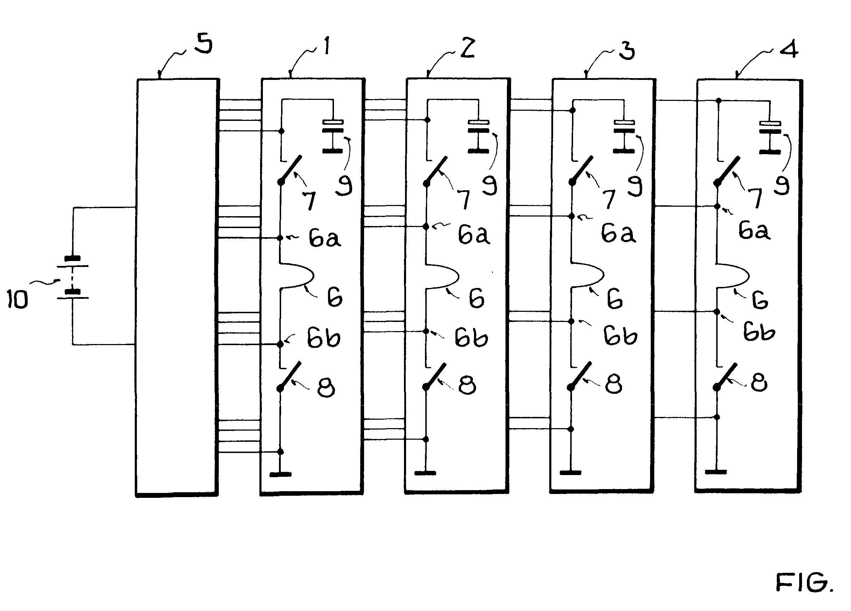

**Die Erfindung betrifft** eine Anordnung zur Verhinderung von Fehlauslösungen bei Insassen - Schutzsystemen gemäß dem Oberbegriff des Patentanspruchs 1. In Kraftfahrzeugen befinden sich Auslösegeräte von Schutzeinrichtungen wie Gurtstraffer und Airbag-Systeme. Über einen Beschleunigungsaufnehmer werden die, für eine Auslösung, relevanten Daten über einen Analog- Digitalwandler in einem Mikroprozessor mit Speichereinrichtungen ausgewertet und gespeichert. Diese Informationen werden mit einer Zünd- und Netzwerkansteuerung, auch untereinander ausgetauscht und überprüft, um im Bedarfsfall die einzelnen Sicherheitssysteme zum richtigen Zeitpunkt auszulösen. Die Auslösung einer Schutzeinrichtung erfolgt in der Regel durch eine Zündpille. In der Zündpille befindet sich ein Draht, der sich bei Stromfluß erwärmt und so eine Zündung hervorruft. Der Strom wird in der Regel, nach dem Schließen von zwei Leistungsschaltern, durch einen sich entladenden Kondensator verursacht. Derartige Systeme können sich auf Störungen hin überprüfen. Eine derartige Fehleranalyse arbeitet nach dem Einfachfehlerkonzept, das bei Auftreten eines Einfachfehlers, wie z.B. ein Kurzschluß im Kabelbaum, eine unnötige Auslösung verhindert. In Figur 1 sind die vier Endstufen, wie sie auch in gängigen Systemen verwendet werden (TEMIC Seriengerät: ZAE-Serie), dargestellt. Dieses System beinhaltet vier einzelne Auslöser in Form von Zündpillen 6, die je einen Airbag bzw. Gurtstraffer für Fahrer und Beifahrer aktivieren. Die Zündpille 6 erhält, den für die Auslösung benötigten Zündstrom von I_{Z} ≥ 1,75 A mit t ≥ 2 ms von einem sich entladenden Kondensator 9 mit einer Mindestenergie von E ≥ R_{Z}·I_{Z}²·t = 12,5 mJ. Der gängige Widerstandswert R_{Z} der Zündpille 6 beträgt R_{Z} ≈ 2Ω. Die, durch die Technologie begrenzte, Ausgangsspannung U_{A} des Ansteuersystem 5 beträgt U_{A} = 25V. Dadurch ergibt sich eine maximale Nennspannung U_{N}= 0,8 · UA für den Kondensator 9 mit U_{N} = 20 V. Die Mindestkapazität für den Kondensator ist dann C = 2·E / U_{N}² =60 µF (Die Kapazität im System muß jedoch in der Praxis größer dimensioniert werden,da bei der Berechnung der Kapazität von C = 60 µF keine Widerstände der Zuleitungen, Energieverluste in den Leistungsschaltern, Toleranzen der Zündkondensatoren usw. für die im schlechtesten Fall auftretenden Bedingungen berücksichtigt sind. Die Kapazität von C = 60µF beinhaltet ausschließlich die Energie, welche die Zündpille benötigt).
Die Entladung des Kondensators 9 ist aber nur nach der Betätigung von zwei Leistungsschaltern 7, 8 möglich, die vom Ansteuersystem 5 aus betrieben werden.

**Nachteilig an dieser Anordnung** ist jedoch, dass bei Auftreten von Doppelfehlern, wie zum Beispiel zwei Kurzschlüsse im Kabelbaum, die volle Bordnetzspannung an der Zündpille anliegen kann. Bei der üblichen Bordnetzspannung von U_{Bat} = 12 V und dem üblichen Zündpillenwiderstand von R_{Z} = 2Ω würde ein Strom I_{Z} = 6 A durch die Zündpille fließen. Dieser Wert liegt deutlich über dem Auslösewert von I_{Z} = 1,75 A. Eine Fehlzündung wäre unvermeidbar.

In der **WO-A-90 02440** wird ein Spannungswandler zum Laden von zwei voneinander getrennten Energiespeichern auf zwei unterschiedliche Spannungswerte, in einer Anordnung zur Auslösung von Insassenschutzystemen, beschrieben. Hierbei steht eine induktiver Energiespeicher in Verbindung mit der Bordnetzspannung. Dieser wird mit Hilfe einer Ansteuerung aufgeladen und liefert dabei eine Spannung, die größer ist als die Bordnetzspannung. Mit dieser Anordnung, die eine höhere Spannung als das Bordnetz aufweist, werden zwei weitere voneinander getrennte kapazitive Energiespeicher aufgeladen und zwar der eine Speicher mit einer höheren und der andere mit einer niedrigeren Spannung. Ferner erfolgt die Aufladung der beiden kapazitiven Energiespeicher seriell, das heißt, das erst nach dem Aufladen des ersten kapazitiven Energiespeichers auf einen festgelegten Wert, der zweite kapazitive Energiespeicher aufgeladen wird.

**Der Erfindung liegt daher die Aufgabe zugrunde** eine Anordnung der eingangs genannten Art zu zeigen, die zusätzlich auch resistent gegen Doppelfehler ist, bisher mögliche Fehlfunktionen weiter einschränkt und sich durch höchste Systemzuverlässigkeit auszeichnet.

**Diese Aufgabe wird erfindungsgemäß durch die Merkmale des Patentanspruchs 1 gelöst.** Bei der vorgeschlagenen Anordnung zur Verhinderung von Fehlauslösungen von Insassen-Schutzsystemen werden Zündpillen zum Einsatz gebracht, die unempfindlich auf die maximal mögliche Bordnetzspannung sind. Dieses wird dadurch erreicht, daß man hochohmigere Zündpillen ins Netz einbringt, die auch bei der maximal vorkommenden Bordnetzspannung nicht ausgelöst werden können. Voraussetzung für den Einsatz solcher Zündpillen ist, daß im Steuersystem höhere Ausgangsspannungen zur Verfügung stehen, welche durch neue Silizium BCD-Prozeße mit z.B. U_{A} = 63 V realisiert werden können.
Vorteilhafte Weiterbildungen der Erfindung ergeben sich aus den abhängigen Ansprüchen.

**Die mit der Erfindung erzielten Vorteile bestehen** insbesondere darin, daß das ganze System sicher gegen Doppelfehler ist und dadurch keine Fehlauslösungen mehr möglich sind. Die gleiche Zündenergie E_{Z}, wie bei bisherigen Anordnungen, kann nun in einem Kondensator mit hoher Nennspannung U_{N} gespeichert werden, so daß der Kapazitätswert C mit C ≈ k·2E·n / U_{N}² klein gehalten werden kann. Die Abmessungen der Kondensatoren verringern sich.
Der Strom I_{Z} der zur Auslösung benötigt wird verringert sich ebenso, so daß der Endstufenschalter kleiner dimensioniert werden kann. Es kann eine höhere Zuverlässigkeit bei verringertem Platzbedarf erzielt werden.

**Anhand der in Figur 1** beschriebenen Anordnungen wird dargestellt, wie die höhere Systemzuverlässigkeit bei verringertem Platzbedarf erzielt werden kann.
Das Ansteuersystem 5 wird über die Bordnetzversorgung 10 mit U_{Bat} = 12 V versorgt. Diese Ansteuersystem 5 beinhaltet in der Regel einen Beschleunigungsaufnehmer der die, für eine Auslösung, relevanten Daten an einen Analog- Digitalwandler weiterleitet, so daß sie in einem Mikroprozessor mit Speichereinrichtungen ausgewertet und abgespeichert werden können. Diese Informationen werden dann mit einer Zünd- und Netzwerkansteuerung, auch untereinander ausgetauscht und überprüft. Diese Informationen werden dann in die einzelnen Endstufen 1, 2, 3, 4, weitergeleitet. Hierbei ist die Versorgungsspannung der Endstufen 1, 2, 3, 4, bzw. die Ausgangsspannung des Ansteuersystems 5 an dieser Stelle U_{A} = 63 V. Jede Endstufe enthält einen Primärzünder in Form einer Zündpille 6. Der Widerstand der Zündpille 6 beträgt R_{Z} ≈ 200 Q. Die Erhöhung des Zündpillenwiderstands verglichen mit den bisherigen Werten von R_{Z} ≈ 2 Q, kann auf einfache Weise erzielt werden: Verringerung des Drahtdurchmessers, Verlängerung des Drahtes, Wahl des Drahtmaterials. Der für die Primärzündung der Zündpille benötigte Zündstrom beträgt I_{Z} = 250 mA bei t = 1 ms. Diese Zündenergie von E = 12,5 mJ, die sich aus E = R_{Z}·I²·t ergibt, wird nach dem Schließen zweier Leistungsschalter 7, 8 von einem Kondensator 9 abgegriffen. Die Nennspannung UN des Kondensators 9 beträgt U_{N} = 0,8 · U_{A} = 50 V. Die Leistungsschalter 7, 8 werden vom Ansteuersystem 5 geschaltet und bewirken dann letztendlich die Auslösung der einzelnen Sicherheitssysteme: Fahrer-Airbag, Beifahrer-Airbag, Gurtstraffer Fahrer und Gurtstraffer Beifahrer zum richtigen Zeitpunkt.
Liegt nun, bedingt durch zwei Kurzschlüsse im Kabelbaum, die volle Bordnetzspannung von U_{Bat} = 12 V an den Punkten 6a und 6b fließt ein Strom von I = U_{Bat} / R_{Z} = 60 mA durch die Zündpille. Dieser Strom ist wesentlich kleiner als der benötigte Zündstrom der Zündpille von I_{Z} = 250 mA. Eine Fehlzündung kann somit nicht ausgelöst werden.
Durch die Verwendung der höheren Nennspannung UN im Kondensator 9 ergibt sich eine Mindestkapazität von C = 2·E / U_{N}²= 10 µF. Vergleicht man diese mit der herkömmlichen Mindestkapazität von C = 60 µF so sieht man, daß der Kondensator wesentlich kleiner in den Abmessungen dimensioniert werden kann. Auch ergeben sich für die Leistungsschalter durch die geringeren Zündströme I_{Zalt} = 1,75 A auf I_{Zneu} = 250 mA günstigere Gestaltungsmöglichkeiten. Die Anforderungen an die Leistungsschalter können reduziert werden. Dies verringert die Kosten und die Abmessungen.

## Patentansprüche

1. Anordnung zur Verhinderung von Fehlauslösungen bei Insassen-Schutzsystemen, bestehend aus einer Bordnetzversorgung U_{Bat} (10) einer Ansteuerung (5) und mehreren Endstufen (1, 2, 3, 4), **dadurch gekennzeichnet, daß** der stromempfindliche Primärzünder (6) einen so hohen Widerstandswert aufweist, daß er durch die maximal vorkommende - Bordnetzspannung, die einen Stromfluß im Primärzünder bewirkt, nicht aktiviert werden kann.

2. Anordnung nach Patentanspruch 1, **dadurch gekennzeichnet, daß** bei einer vorgegebenen Zündenergie der Zündstrom des Primärzünders zugunsten der angelegten Spannung möglichst klein und so die Dimensionierung der spannungsabhängigen Kondensatoren und der stromabhängigen Leistungsschalter (6) in den Endstufen (1, 2, 3, 4) minimal ist.

## Claims

1. Arrangement for preventing spurious triggering of passenger protection systems, consisting of a vehicle electrical system supply U_{Bat} (10), a control system (5) and a plurality of output stages (1, 2, 3, 4), **characterised in that** the current-sensitive primary igniter (6) has such a high resistance value that it cannot be activated by the maximum possible vehicle electrical supply voltage which causes current to flow in the primary igniter.

2. Arrangement according to Claim 1, **characterised in that,** with a predetermined ignition energy, the ignition current of the primary igniter is as low as possible, to the advantage of the applied voltage, and the voltage-dependent capacitors and current-dependent power switches (6) in the output stages (1, 2, 3, 4) thus have minimum dimensions.

## Revendications

1. Dispositif pour empêcher des déclenchements erronés dans des systèmes de protection de passagers, constitué par une unité d'alimentation U_{Bat} (10) du réseau de bord pour une unité de commande (5) et plusieurs étages finals (1,2,3,4), caractérisé en ce que le dispositif d'amorçage primaire (6) sensible au courant possède une valeur respective si élevée qu'il ne peut pas être activé par la tension maximale du réseau de bord, qui apparaît et produit un flux de courant dans le dispositif d'amorçage primaire.

2. Dispositif selon la revendication 1, caractérisé en ce que pour une énergie d'amorçage prédéterminée, le courant d'amorçage du dispositif d'amorçage primaire est aussi faible que possible en faveur de la tension appliquée et de ce fait le dimensionnement des condensateurs, qui dépendent de la tension, et des interruptions de puissance (6), qui dépendent du courant, dans les étages finals (1,2,3,4) est minimum.
